# FASCICULE DE BREVET EUROPEEN

(11) **EP 1 328 585 B1**
(45) Date de publication et mention de la délivrance du brevet: **21.12.2005**
(21) Numéro de dépôt: 01980637.1
(22) Date de dépôt: 23.10.2001
(51) Int. Cl.: C08L 95/00, C08K 9/04, C08K 9/06, E01C 7/18

(54) **PROCEDE DE FABRICATION D'ENROBES BITUMINEUX A FROID**
VERFAHREN ZUR HERSTELLUNG VON BITUMINÖSEN KALTEINBAUMISCHGÜTERN
METHOD FOR MAKING COLD-PROCESS BITUMINOUS MIX

(30) Priorité: 23.10.2000 FR 0013519
(43) Date de publication de la demande: 23.07.2003
(73) Titulaire: TotalFinaElf France, 92800 Puteaux (FR)
(72) Inventeur: MALOT, Michel, F-76210 Saint Eustache la Foret (FR); LEVESQUES, Christian, F-76700 Gainneville (FR)
(74) Mandataire: Jolly, Jean-Pierre
(86) Numéro de dépôt international: PCT/FR2001/003290
(87) Numéro de publication internationale: WO 2002/034836

(56) Documents cités:
- GB-A- 2 255 978

## Description

La présente invention concerne la fabrication d'enrobés bitumineux à froid, utilisables notamment dans l'industrie routière, à l'aide d'une émulsion de type bitume en phase aqueuse en mélange avec des granulats.

Dans la technique routière, on désigne par enrobés des matériaux pour la construction et l'entretien des corps de chaussées et de leurs revêtements, et pour la réalisation de tous travaux de voirie. Ils sont composés de granulats minéraux, en majorité de nature siliceuse (silex, quartzites, granit) ou silico-calcaire, et de liants bitumineux.

Selon le mode d'enrobage des granulats, on classe ces enrobés en deux catégories : les enrobés à chaud, élaborés avec des matériaux, dont le liant de type bitume, portés à des températures relativement élevées, et les enrobés à froid, réalisés par la mise en émulsion du liant en phase aqueuse avec un agent tensioactif, par apport d'énergie mécanique (moulin colloïdal, turbine), nécessaire à la dispersion du liant en fines gouttelettes, et malaxage avec les granulats, à des températures plus faibles.

Les enrobés à froid présentent au niveau environnemental l'avantage important, lors de leur mise en oeuvre, de ne pas produire d'émissions de fumées, et donc d'être bien adaptés aux voiries urbaines. Ils présentent aussi une grande souplesse d'emploi, du fait des basses températures requises pour leur application, en particulier dans des endroits où il n'est pas possible d'avoir un dispositif de chauffage. Lors de l'application de la composition d'enrobés à froid en construction routière, se produit la rupture de l'émulsion avec élimination de l'eau et la formation d'un film continu et adhésif du liant de type bitume sur les granulats.

Les émulsions sont utilisées en technique routière depuis plusieurs décennies et font l'objet de progrès constants. Le regain d'intérêt pour les techniques d'enrobage à froid et leur nouvel éventail d'application, notamment pour les matériaux de chaussée adaptés aux routes à fort trafic, conduisent à mieux connaître, d'une part, les mécanismes de rupture de l'émulsion entre l'étape de mélange, notamment de type malaxage, et les étapes de répandage et de compactage, pour conserver à l'enrobé une maniabilité compatible avec sa mise en oeuvre, notamment pendant le stockage et le transport, et, d'autre part, les mécanismes de filmification de l'émulsion sur les granulats.

La filmification du bitume autour des granulats implique quatre étapes successives,dont les cinétiques doivent être maîtrisées :
- le mouillage de l'ensemble des minéraux par l'émulsion,
- l'hétérofloculation des globules de bitume, qui établit la distribution du bitume sur la surface minérale et qui est prépondérante quant à la continuité du film,
- la coalescence des globules de bitume, qui est l'étape de déstabilisation de l'émulsion,
- la maturation du bitume, correspondant au réarrangement moléculaire au sein du bitume, indispensable pour atteindre dans un délai court, si possible dès le compactage, les performances mécaniques optimales, dont la cohésion.

Avec les émulsions cationiques, l'utilisation de granulats à dominance calcaire pose parfois des problèmes d'adhérence du bitume. Ceci s'explique par la formation d'une couche friable, due à l'attaque de la surface du granulat par HCl, et par la rupture trop rapide de l'émulsion, par suite d'une remontée brutale du pH.

Par ailleurs, la coalescence doit se dérouler progressivement, pour donner un délai de maniabilité satisfaisant à l'enrobé, tout en lui conservant l'aptitude à développer une cohésion finale importante.

Une tentative d'amélioration de la maniabilité est abordée dans le brevet FR 2 695 664, qui décrit un procédé pour l'obtention d'enrobés denses à froids, par enrobage de granulats avec une émulsion mixte d'un bitume dur et d'un bitume mou, dans des proportions telles que leur mélange ait la dureté finale souhaitée. Toutefois, ce document n'apporte pas de solution au contrôle de la vitesse de rupture de l'émulsion et ne se préoccupe pas de l'évolution des phénomènes interfaciaux du système granulats/émulsion.

Une autre approche est décrite dans la demande EP 896 985, qui concerne un procédé pour la réalisation d'enrobés denses par enrobage de granulats par une émulsion bitumineuse constituée d'un mélange d'une émulsion à rupture lente et d'une émulsion à rupture rapide. Malheureusement, ce procédé de fabrication d'enrobés nécessite la mise en oeuvre de deux émulsions et il est donc plus contraignant que le procédé usuel. En outre, il ne se préoccupe pas de l'hydrophobation des granulats, et la cinétique de coalescence du bitume, qui conditionne la montée rapide en cohésion de l'enrobé, n'est pas maîtrisée.

Par ailleurs, la maîtrise du moment de rupture d'une émulsion aqueuse de bitume est décrite dans le brevet EP 864 611, par l'incorporation d'un agent rupteur encapsulé, dont la libération se fait par action mécanique lors du compactage. Malheureusement, ce procédé ne permet pas de limiter les interactions entre granulats et émulsion, pendant la période précédant le compactage.

La Demanderesse a effectué des recherches qui lui ont permis de progresser dans la compréhension des phénomènes de rupture et des mécanismes gouvernant la filmification des enrobés à froid, notamment grâce à la caractérisation des propriétés interfaciales et de la structure moléculaire des agents tensioactifs utilisés par modélisation moléculaire.

En particulier, elle a établi que, de façon surprenante, l'hydrophobation de l'ensemble de la surface minérale des granulats, avant leur mélange avec l'émulsion, en limitant fortement les interactions avec l'émulsion et donc les possibilités de rupture de celle-ci, confère à l'enrobé une maniabilité accrue depuis l'étape d'enrobage jusqu'à celle du répandage. Cette hydrophobation est obtenue par l'utilisation d'un agent ou dope d'interface approprié, composé de molécules organiques polaires, dont l'adsorption sur les granulats forme un film hydrophobant, modifiant ainsi leur état de surface. Ce film doit être réalisé de préférence en monocouche sur les granulats. Le taux d'hydrophobation obtenu permet d'agir sur la cinétique de coalescence et, par conséquent, sur la vitesse de rupture de l'émulsion. De plus, l'hydrophobation permet l'enrobage ultérieurement des granulats par le bitume, en s'affranchissant de la nature de ceux-ci.

L'invention a donc pour objet un procédé de fabrication d'enrobés bitumineux à froid, à l'aide d'une émulsion de type bitume en phase aqueuse et de granulats, caractérisé en ce que, préalablement au mélange de l'émulsion avec lesdits granulats, on procède au traitement de ces granulats par un agent d'hydrophobation.

Selon l'invention, l'agent d'hydrophobation agit comme modificateur de la tension superficielle de la surface des granulats.

En particulier, les molécules de l'agent d'hydrophobation forment un film organique lipophile à la surface des granulats.

De préférence, l'agent d'hydrophobation est constitué de composés aminoacides ou d'alkylamines.

D'autres composés, tels que ceux de type repoussant l'eau (en anglais "water repellent"), ou des composés tensioactifs macromoléculaires peuvent aussi être utilisés.

En particulier, les composés aminoacides peuvent être des polyalkylamphopolycarboxyglycinates et, notamment, des suifamphopolycarboxyglycinates ;

En outre, les composés alkylamines peuvent être des alkylsuifpolypropylènepolyamines.

Egalement, l'agent d'hydrophobation des granulats peut être composé de polyoxyéthylènepolyalkylétherphosphate, tel que du polyoxyéthylène oléyl étherphosphate.

Plus particulièrement, l'agent d'hydrophobation est utilisé en phase liquide, lors du mouillage des granulats, et de préférence en phase aqueuse.

Dans un mode de réalisation préféré, l'agent tensioactif d'hydrophobation est introduit à un taux d'au moins 0,04% en poids par rapport aux granulats.

Selon l'invention, l'émulsion de type bitume est réalisée à partir de bitume naturel, qui est choisi parmi les bitumes purs, les bitumes fluxés et les bitumes modifiés par des polymères, et qui est dispersé en phase aqueuse avec un agent émulsifiant. On entend par bitume naturel, le produit obtenu notamment comme résidu de distillation sous vide de pétrole brut et désasphaltage de ce résidu.

Avantageusement, le bitume est un grade dur 50/70 (pénétrabilité à 25°C, mesurée selon la norme NF T 66-004), qui peut être acidifié notamment par un brai d'acide gras.

L'émulsion peut aussi être également réalisée à partir de liant synthétique.

De préférence, l'émulsion bitumineuse comprend entre 60 et 70% en poids de bitume.

Dans le procédé selon l'invention, entre l'étape de mélange de l'émulsion et des granulats et l'étape d'application par répandage de l'enrobé obtenu, la durée de maniabilité est supérieure à 4 heures, de préférence d'au moins 8 heures et, encore plus préférablement, d'au moins 24 heures.

La Demanderesse a également établi qu'après le répandage de l'enrobé, l'énergie mécanique apportée par le compactage, qui est une étape primordiale pour la densification de l'enrobé, est insuffisante pour provoquer la rupture complète de l'émulsion, de sorte que cette rupture peut avantageusement être obtenue par l'ajout dans l'émulsion d'un agent de coalescence. Les molécules de l'agent de coalescence, en modifiant la balance hydrophile-lipophile à l'interface des phases de l'agent tensioactif de l'émulsion, provoquent la rupture des films interfaciaux eau-bitume et l'agglomération des globules en "amas", sur les granulats. Cette étape apporte une amélioration de la vitesse de montée en cohésion de l'enrobé et de sa résistance au désenrobage par l'eau.

Le procédé conforme à l'invention englobe donc, en outre, l'introduction dans l'émulsion de type bitume d'un agent de coalescence.

Selon l'invention, l'agent de coalescence est composé d'amines éthoxylées et propyloxylées en C12 à C14, d'alcools éthoxylés et propyloxylés en C8 à C12, de polyacrylate de sodium, de composés glycoliques ou de composés de type antimousse tels que les huiles minérales en C20 à C30 avec des sites silicones éthoxylés ou des mélanges d'huiles silicones et de silice.

De préférence, l'agent de coalescence est introduit au taux d'au moins 0,03% en poids par rapport aux granulats, immédiatement avant leur mélange avec l'émulsion. Cet agent de coalescence est introduit dans l'émulsion bitumineuse de préférence en phase aqueuse.

Selon l'invention, la composition d'enrobé bitumineux à froid comporte en outre l'introduction dans l'émulsion de type bitume d'un agent filmogène.

En effet, la coalescence des globules de bitume s'accompagne d'un retrait volumique, correspondant à un équilibre thermodynamique plus stable (formation d'amas), et l'action d'un agent filmogène se révèle nécessaire pour obtenir un film continu de bitume, ce qui se traduit par une meilleure cohésion de l'enrobé.

Plus particulièrement, l'agent filmogène peut être composé de polyacrylate d'alkyle et, en particulier, de polyacrylate d'éthyle. Dans un mode de réalisation préféré, il est introduit au taux d'au moins 0,12 % en poids par rapport aux granulats, avant l'enrobage. Toutefois, l'agent de coalescence et l'agent filmogène peuvent aussi être introduits après l'enrobage.

L'émulsion bitumineuse est obtenue par introduction dans l'eau d'un émulsifiant ou tensioactif usuel, tel que notamment les dérivés d'alkylamines, les mélanges d'alkylamidopolyamines et de sels d'ammonium quaternaire, ou les composés d'alkylpropylènepolyamines tels que les N suif propylènepolyamines.

Ce type d'émulsion est cationique, mais il est évident que l'invention s'applique aussi aux émulsions anioniques ou non ioniques.

La composition d'enrobés bitumineux à froid conforme à l'invention trouve des applications particulièrement intéressantes dans l'industrie routière, notamment comme enrobés denses, enrobés drainants, bétons bitumineux minces (BBM), bétons bitumineux très minces (BBTM), bétons bitumineux ultra-minces (BBUM) et enrobés coulés à froid, pour la réalisation de couches d'assise ou de revêtements.

Toutefois, d'autres applications industrielles peuvent être envisagées.

Des modes préférés de mise en oeuvre de l'invention vont être décrits ci-aprés.

Pour la fabrication d'enrobés bitumineux à froid selon l'invention, on a réalisé différentes formulations d'enrobés denses à froid (de compacité supérieure à 90%), en utilisant des granulats du type Meilleraie (diorites porphyriques de nature siliceuse, pouvant être assimilées à un mélange SiO₂/CaO 60/40 % en poids), de granulométrie 0/10.

### 1) Hydrophobation des granulats

Ils sont hydrophobés au moment de leur mouillage par un additif de type aminoacide, qui est un suif-amphopolycarboxyglycinate.

L'adsorption de cet additif sur les granulats a été examinée en déterminant les tensions superficielles des phases aqueuses récupérées par centrifugation, après mise en contact pendant 1 heure de la solution de mouillage avec les granulats. Les mesures de tension superficielle ont été effectuées au moyen d'un tensiomètre à lame, à une température moyenne de 20°C, mais il est possible d'utiliser un autre type d'appareil, tel qu'un tensiomètre à goutte pendante.

Le tracé de la courbe de la tension superficielle en fonction de la concentration en agent d'hydrophobation, présente un palier jusqu'à une concentration d'environ 0,04 % en poids par rapport aux granulats, puis, au-delà, une décroissance rapide de cette tension superficielle, due à la présence en excès de cet agent dans la phase aqueuse. Cette concentration limite correspond à l'adsorption d'une monocouche de l'agent d'hydrophobation, et elle a été retenue comme valeur optimale. En pratique, les granulats sont traités avec 4 ppc (parties pour cent) d'une solution aqueuse à 1 % en poids de cet agent d'hydrophobation.

L'agent d'hydrophobation peut toutefois être aussi un composé d'alkylamines, tel qu'un dérivé de suif-dipropylène triamine, ou un polyoxyéthylènepolyalkyléterphosphate.

### 2) Réalisation de formulations d'enrobés

Le bitume utilisé est un bitume Viatotal 50/70 de TOTALFINAELF, acidifié par un brai d'acide gras, dont la mise en émulsion cationique, à la concentration de 60 % en poids, est réalisée avec l'émulsifiant commercialisé sous l'appellation Stabiram 730 par CECA, qui est un mélange d'alkylamidopolyamines et de sels d'ammonium quaternaire (10 kg/t d'émulsion) et avec de l'acide chlorhydrique (5,4 kg/t d'émulsion). Le bitume peut naturellement être acidifié par d'autres produits.

Une première formulation 1 a été réalisée avec un enrobé à chaud de référence. Une deuxième formulation comparative 2 a été réalisée avec l'émulsion ci-dessus sans introduction d'agent de coalescence et d'agent filmogène, et avec les granulats hydrophobés comme ci-dessus.

On a procédé ensuite à diverses incorporations d'additifs, dans l'émulsion bitumineuse, afin d'obtenir, après l'enrobage des granulats dans un malaxeur, les compositions suivantes :
- formulation 3 : introduction, immédiatement avant l'enrobage des granulats dans l'émulsion précédente seulement d'un agent de coalescence A, composé d'huile minérale en C20 à 30 avec des sites silicone éthoxylés, introduit au taux de 2 ppc (parties pour 100 parties de granulats) d'une solution à 1,5 % en poids ;
- formulation 4 : introduction d'un couple agent de coalescence/agent filmogène, comprenant le produit A comme précédemment et au même taux et, comme agent filmogène, un composé B, qui est une solution aqueuse de polyacrylate d'éthyle, au taux de 2 % en poids par rapport au bitume ;
- formulation 5 : introduction d'un couple agent de coalescence/agent filmogène, comprenant le composé C, composé anionique d'amines éthoxylées et propyloxylées en C12 à C14, au même taux que le produit A, et le produit B, au même taux que précédemment.

L'enrobage des granulats est réalisé de façon à obtenir une teneur résiduelle en bitume de 6,2 ppc (parties pour 100 parties de granulats).

Différentes caractéristiques des différentes formulations d'enrobés à froid sont mesurées, en particulier :
- le pourcentage en poids d'eau perdue au compactage, et le pourcentage en poids d'au perdue après 24 h à 20°C, mesurés lors de la réalisation d'éprouvettes d'enrobés suivant l'essai DURIEZ décrit dans la norme NF P 98-251-1 ;
- l'adhésivité passive selon NFT 66 018 ;
- la résistance à la compression sous différentes conditions, mesurée suivant l'essai DURIEZ décrit dans la norme NF P 98-251-1, qui spécifie une méthode d'essai ayant pour but de déterminer, pour une température et un compactage donnés, la tenue à l'eau d'un mélange hydrocarboné, à partir du rapport r₁/R₂ ou I/C des résistances à la compression avec et sans immersion des éprouvettes d'enrobés (r₁ désignant la résistance à la compression mesurée après 7 jours à 18°C dans l'eau et R₂ désignant la résistance à la compression mesurée après 7 jours à 18°C avec 50% d'hydrométrie relative HR).

Les résultats sont rassemblés dans le Tableau ci-après.

| **Formulations** | **1** | **2** | **3** | **4** | **5** |
|---|---|---|---|---|---|
| Agent de coalescence | - | - | A | A | C |
| Agent filmogène | - | - | - | B | B |
| % en poids d'eau perdue au compactage | - | 49 | 65 | 72 | 69 |
| % en poids d'eau perdue après 24 h à 20°C sans ventilation | - | 63 | 84 | 80 | 86 |
| Adhésivité passive selon NFT 66 018 | 90 | 90 | 90 | 90 | 90-100 |
| Résistance à la compression selon NFP 98-251-1 en MPa R₁, 1jour à T° ambiante | - | 3,4 | 4,5 | 5,8 | 5,1 |
| R₂ 8 jours dont 7jours à 18°C 50% HR | 8,0 | 6,4 | 7,8 | 8,0 | 7,2 |
| r₁ 8 jours dont 7 jours à 18°C dans eau | 8,0 | 3,3 | 4,8 | 5,9 | 5,8 |
| I/C = r₁/R₂ | 1,0 | 0,52 | 0,62 | 0,74 | 0,80 |

En comparant les pourcentages d'eau perdue au compactage des formulations d'enrobés sans agent de coalescence (n°2) et avec cet agent (n°3-5), l'efficacité de cet additif pour le drainage de l'eau de l'émulsion apparaît clairement (augmentation de plus de 30% du poids d'eau éliminée).

On constate, en outre, d'après les valeurs obtenues de résistance à la compression mesurée 1 et 8 jours après compactage, que au niveau de l'enrobé, l'introduction de l'agent d'hydrophobation des granulats (formulation 2) permet d'obtenir des valeurs de cohésion déjà appréciables, alors qu'avec la même émulsion mais sans hydrophobation des granulats, il n'est pas possible de réaliser des éprouvettes pour faire cet essai, par suite d'une rupture immédiate de l'émulsion et prise en masse des granulats.

Par ailleurs, l'introduction, d'une part, d'un agent de coalescence et, d'autre part, d'un couple agent de coalescence/agent filmogène, dans les formulations d'enrobés, a un effet positif sur leur vitesse de montée en cohésion, sur leur résistance mécanique finale, ainsi que sur leur tenue à l'eau (I/C).

C'est en particulier avec le couple C/B que l'on obtient la meilleure tenue à l'eau de l'enrobé (I/C = 0,80), qui est très satisfaisante par rapport à celle de l'enrobé à chaud de référence (I/C = 1) et par rapport à la valeur de la norme d'enrobé à chaud NFP 98-130 qui donne I/C ≥ 0,75.

Ces bonnes performances sont d'ailleurs confirmées par la valeur d'adhésivité passive selon NFT 66 018, qui est de 90-100.

Les enrobés conformes à l'invention ont une maniabilité satisfaisante, étant stockables et manipulables avant le compactage dans un délai d'au moins 24 heures après mélange des granulats avec une émulsion bitumineuse, et cela même en utilisant une émulsion à rupture rapide du type utilisé pour les enduits superficiels, alors que des enrobés fabriqués avec les mêmes granulats non traités perdent dès le mélange des granulats et de l'émulsion de bitume toute propriété de manutention et stockage, par suite de la rupture très rapide de l'émulsion, bien avant le compactage.

## Revendications

1. Procédé de fabrication d'enrobés bitumineux à froid, à l'aide d'une émulsion de type bitume en phase aqueuse et de granulats, **caractérisé en ce que**, préalablement au mélange de ladite émulsion avec lesdits granulats, on procède au traitement de ces granulats par un agent d'hydrophobation.

2. Procédé selon la revendication 1, **caractérisé en ce que** l'agent d'hydrophobation est choisi parmi les composés aptes à modifier la tension superficielle de la surface des granulats.

3. Procédé selon la revendication 2, **caractérisé en ce que** l'agent d'hydrophobation est choisi parmi les composés dont les molécules sont aptes à former un film organique lipophile à la surface des granulats.

4. Procédé selon l'une des revendications 1 à 3, **caractérisé en ce que** l'agent d'hydrophobation est constitué de composés aminoacides.

5. Procédé selon l'une des revendications 1 à 3, **caractérisé en ce que** l'agent d'hydrophobation est constitué d'alkylamines.

6. Procédé selon l'une des revendications 1 à 3, **caractérisé en ce que** l'agent d'hydrophobation est un composé tensio-actif de type macromoléculaire.

7. Procédé selon la revendication 4, **caractérisé en ce que** les composés aminoacides sont des polyalkylamphopolycarboxyglycinates.

8. Procédé selon la revendication 7, **caractérisée en ce que** les composés aminoacides sont des suif-amphopolypropylènepolyamines.

9. Procédé selon la revendication 5, **caractérisé en ce que** les composés alkylamines sont des alkylsuifpolypropylènepolyamines.

10. Procédé selon l'une des revendications précédentes, **caractérisé en ce que** l'agent d'hydrophobation est utilisé en phase liquide, lors du mouillage des granulats.

11. Procédé selon l'un des revendications précédentes, **caractérisé en ce que** l'émulsion de type bitume est réalisée à partir de bitume naturel, choisi parmi les bitumes purs, les bitumes fluxés et les bitumes modifiés et dispersés en phase aqueuse avec un agent émulsifiant.

12. Procédé selon l'une des revendications 1 à 11, **caractérisé en ce que** l'émulsion de type bitume est réalisée à partir de liant synthétique.

13. procédé selon l'une des revendications précédentes, **caractérisé en ce que** l'émulsion de type bitume comprend entre 60 et 70 % en poids de bitume.

14. Procédé selon l'une des revendications précédentes, **caractérisé en ce que** l'émulsion de type bitume comprend en outre un agent de coalescence.

15. Procédé selon la revendication 14, **caractérisé en ce que** l'agent de coalescence est choisi dans le groupe constitué par les amines éthoxylées et propyloxylées en C12 à C14, les alcools éthoxylés et propyloxylés en C8 à C12, le polyacrylate de sodium, des composés glycoliques et des composés antimousse tels que les huiles minérales en C20 à C30 avec des sites silicones éthoxylés et des mélanges d'huiles silicones et de silice.

16. Procédé selon l'une des revendications 14 et 15, **caractérisé en ce** l'agent de coalescence est introduit dans l'émulsion immédiatement avant son mélange avec les granulats.

17. Procédé selon l'une des revendications précédentes, **caractérisé en ce que** l'émulsion de type bitume comprend en outre un agent filmogène.

18. Procédé selon la revendication 17, **caractérisé en ce que** l'agent filmogène est composé d'une polyacrylate d'alkyle et, en particulier, de polyacrylate d'éthyle.

19. Procédé selon l'une des revendications 17 et 18, **caractérisé en ce que** l'agent filmogène est introduit dans l'émulsion immédiatement avant son mélange avec les granulats.

20. Utilisation de la composition d'enrobés bitumineux à froid obtenue par le procédé selon l'une des revendications précédentes, dans l'industrie routière, pour la réalisation d'enrobés denses, d'enrobés drainants, de bétons bitumineux minces (BBM), de bétons bitumineux très minces (BBTM), de bétons bitumineux ultra-minces (BBUM) ou d'enrobés coulés à froid, servant à la fabrication de couches d'assise ou de revêtements.

## Patentansprüche

1. Verfahren zur Herstellung von bituminösen Kaltbaumischgütern mit Hilfe einer Emulsion vom Typ eines Bitumens in wäßriger Phase und eines Granulats, **dadurch gekennzeichnet, daß** vor der Vermischung der besagten Emulsion mit dem besagten Granulat eine Behandlung dieses Granulats durch ein Hydrophobisierungsmittel durchgeführt wird.

2. Verfahren gemäß Anspruch 1, **dadurch gekennzeichnet, daß** das Hydrophobisierungsmittel ausgewählt wird unter Verbindungen, die zur Modifizierung der Oberflächenspannung der Oberfläche des Granulats geeignet ist.

3. Verfahren gemäß Anspruch 2, **dadurch gekennzeichnet, daß** das Hydrophobisierungsmittel ausgewählt wird unter den Verbindungen, deren Moleküle geeignet sind, einen lipophilen organischen Film auf der Oberfläche des Granulats zu bilden.

4. Verfahren gemäß einem der Ansprüche 1 bis 3, **dadurch gekennzeichnet, daß** das Hydrophobisierungsmittel aus Aminosäureverbindungen aufgebaut ist.

5. Verfahren gemäß einem der Ansprüche 1 bis 3, **dadurch gekennzeichnet, daß** das Hydrophobisierungsmittel aus Alkylaminen aufgebaut ist.

6. Verfahren gemäß einem der Ansprüche 1 bis 3, **dadurch gekennzeichnet, daß** das Hydrophobisierungsmittel eine oberflächenaktive Verbindung vom makromolekularen Typ ist.

7. Verfahren gemäß Anspruch 4, **dadurch gekennzeichnet, daß** die Aminosäureverbindungen Polyalkylamphopolycarboxyglycinate sind.

8. Verfahren gemäß Anspruch 7, **dadurch gekennzeichnet, daß** die Aminosäureverbindung Fett-Amphopolypropylenpolyamine sind.

9. Verfahren gemäß Anspruch 5, **dadurch gekennzeichnet, daß** die Alkylaminverbindungen Alkylfettpolypropylenpolyamine sind.

10. Verfahren gemäß einem der vorangehenden Ansprüche, **dadurch gekennzeichnet, daß** das Hydrophobisierungsmittel als Flüssigphase bei der Benetzung des Granulats verwendet wird.

11. Verfahren gemäß einem der vorangehenden Ansprüche, **dadurch gekennzeichnet, daß** die Bitumenemulsion ausgehend von natürlichem Bitumen hergestellt wird, ausgewählt unter reinen Bitumen, gefluxten Bitumen sowie von modifizierten und in wäßriger Phase mit einem Emulgiermittel dispergierten Bitumen.

12. Verfahren gemäß einem der Ansprüche 1 bis 11, **dadurch gekennzeichnet, daß** die Bitumenemulsion hergestellt wird ausgehend von synthetischem Bindemittel.

13. Verfahren gemäß einem der vorangehenden Ansprüche, **dadurch gekennzeichnet, daß** die Bitumenemulsion 60 bis 70 Gew.-% Bitumen umfaßt.

14. Verfahren gemäß einem der vorangehenden Ansprüche, **dadurch gekennzeichnet, daß** die Bitumenemulsion ein weiteres Bindemittel umfaßt.

15. Verfahren gemäß Anspruch 14, **dadurch gekennzeichnet, daß** das Bindemittel ausgewählt wird aus der Gruppe, die aus ethoxylierten und propoxylierten Aminen mit C12 bis C14, ethoxylierten und propoxylierten Alkoholen mit C8 bis C12, Natriumpolyacrylat, Glykolverbindungen und Entschäumerverbindungen wie Mineralölen aus C20 bis C30 mit ethoxylierten Silikon-Stellen und Mischungen von Silikonölen und Kieselguhr besteht.

16. Verfahren gemäß einem der Ansprüche 14 und 15, **dadurch gekennzeichnet, daß** das Bindemittel in die Emulsion unmittelbar vor ihrer Vermischung mit dem Granulat eingeführt wird.

17. Verfahren gemäß einem der vorangehenden Ansprüche, **dadurch gekennzeichnet, daß** die Bitumenemulsion ferner einen Filmbildner umfaßt.

18. Verfahren gemäß Anspruch 17, **dadurch gekennzeichnet, daß** der Filmbildner eine Alkyl-Polyacrylat-Verbindung und insbesondere eine Ethyl-Polyacrylat-Verbindung ist.

19. Verfahren gemäß einem der Ansprüche 17 und 18, **dadurch gekennzeichnet, daß** der Filmbildner in die Emulsion unmittelbar vor ihrer Vermischung mit dem Granulat eingeführt wird.

20. Verwendung der Zusammensetzung der bituminösen Kaltbaumischgüter, die durch das Verfahren gemäß einem der vorangehenden Ansprüche erhalten wurden, beim Straßenbau, zur Herstellung von Abdichtungen, von Drainagemischgütern, von Bitumendünnbeton (BBM), von sehr dünnem Bitumenbeton (BBTM), von ultradünnem Bitumenbeton (BBUM) oder von kalt vergossenen Mischgütern, zur Herstellung von unteren Lagen oder Bezügen dienend.

## Claims

1. A process for the production of bituminous cold coatings, using a bitumen-type emulsion in the aqueous phase and aggregates, **characterised in that**, before mixing said emulsion with said aggregates, said aggregates are treated with a water-repelling agent.

2. A process according to claim 1, **characterised in that** the water-repelling agent is chosen from the compounds able to modify the surface tension of the surface of the aggregates.

3. A process according to claim 2, **characterised in that** the water-repelling agent is chosen from the compounds whose molecules are able to form an organic lipophilic film on the surface of the aggregates.

4. A process according to any one of claims 1 to 3, **characterised in that** the water-repelling agent is composed of amino acid compounds.

5. A process according to any one of claims 1 to 3, **characterised in that** the water-repelling agent is composed of alkyl amines.

6. A process according to any one of claims 1 to 3, **characterised in that** the water-repelling agent is a surface-active compound of macromolecular type.

7. A process according to claim 4, **characterised in that** the amino acid compounds are polyalkylamphopolycarboxy glycinates.

8. A process according to claim 7, **characterised in that** the amino acid compounds are tallow-amphopolypropylene polyamines.

9. A process according to claim 5, **characterised in that** alkyl amine compounds are alkyl tallow polypropylene polyamines.

10. A process according to any one of the preceding claims, **characterised in that** the water-repelling agent is used in the liquid phase, during the wetting of the aggregates.

11. A process according to any one of the preceding claims, **characterised in that** the bitumen-type emulsion is produced from natural bitumen chosen from the pure bitumens, the fluxed bitumens and the bitumens modified and dispersed in the aqueous phase with an emulsifying agent.

12. A process according to any one of claims 1 to 11, **characterised in that** the bitumen-type emulsion is produced from synthetic binder.

13. A process according to any one the preceding claims, **characterised in that** the bitumen-type emulsion comprises between 60 and 70 % of bitumen.

14. A process according to any one the preceding claims, **characterised in that** the bitumen-type emulsion further comprises a coalescing agent.

15. A process according to claim 14, **characterised in that** the coalescing agent is chosen from the group comprising the ethoxylated and propyloxylated amines with C12 to C14, the ethoxylated and propyloxylated alcohols with C8 to C12, sodium polyacrylate, glycolic compounds and antifoaming compounds, such as mineral oils with C20 to C30 with ethoxylated silicone sites and mixtures of silicone oils and silica.

16. A process according to either one of claims 14 and 15, **characterised in that** the coalescing agent is introduced into the emulsion immediately before it is mixed with the aggregates.

17. A process according to any one of the preceding claims, **characterised in that** the bitumen-type emulsion further comprises a film-forming agent.

18. A process according to claim 17, **characterised in that** the film-forming agent is composed of an alkyl polyacrylate and, in particular, of ethyl polyacrylate.

19. A process according to either one of claims 17 and 18, **characterised in that** the film-forming agent is introduced into the emulsion immediately before it is mixed with the aggregates.

20. Use of the composition of bituminous cold coatings, obtained by the process according to any one of the preceding claims in the road construction industry, for producing dense coatings, draining coatings, thin bituminous concretes (TBC), very thin bituminous concretes (VTBC), ultrathin bituminous concretes (UTBC) or cold-poured coatings serving to produce foundation layers or coverings.
